# EUROPEAN PATENT APPLICATION

(11) **EP 0 621 219 A1**
(43) Date of publication of application: **26.10.1994**
(21) Application number: 94302610.4
(22) Date of filing: 13.04.1994
(51) Int. Cl.: B65G 39/12

(54) **Conveyors**

(30) Priority: 19.04.1993 GB 9308052
(71) Applicant: CONVEYOR UNITS LIMITED, Stourport-on-Severn Worcestershire DY13 9PT (GB)
(72) Inventor: Toye, Edward William, Rock Near Kidderminster (GB)
(74) Representative: Lucking, David John

(57) **Abstract**

A conveyor (10) of the kind specified wherein the spindles for at least some of the rollers (14) comprise stub spindles (20) mounted on the side members (11), there being a pair of opposed stub spindles (20) for each such roller (14) and each stub spindle (20) having an end portion (22) which extends within a socket (19) provided at an end of the roller, each end (22) portion being barrel shaped, as hereindefined, and the stub spindle (20) and socket (19) being adapted to inter-engage to prevent relative rotation therebetween and each stub spindle (20) comprising a one-piece moulding of synthetic plastics material.

## Description

This invention relates to a conveyor frame, hereinafter referred to as being of the kind specified, comprising a pair of spaced side members each having a plurality of mounting means to mount a plurality of rollers in spaced relation between the side members. The invention also relates to a conveyor, hereinafter referred to as being of the kind specified, comprising a conveyor frame of the kind specified having a plurality of rollers mounted between said side members, each roller being provided with a hearing means having a socket the rollers being mounted in spaced relation between said pair of side members on spindles which are carried by said mounting means and which are provided with a portion which extends within the socket, to permit each roller to rotate about a roller axis.

In a conveyor of the type specified, the rollers may be free running or driven. Articles may be placed directly on the conveyor rollers or on an endless conveyor belt which extends around the rollers to provide a greater support area for articles in a known manner. Such conveyors may extend horizontally or may be inclined.

The spindle may comprise a polygonal in cross-section elongate element which is received in said socket and which extends throughout it a roller and has end portions which project outwardly from opposite ends of the roller and are mounted on said side members so as to span therebetween. The polygonal shape prevents relative rotation between the socket and the spindle and between the spindle and the frame members.

Alternatively, the spindle may comprise stub spindles mounted on the side members, there being a pair of opposed stub spindles for each roller and each stub spindle having an end portion which extends within a socket provided at each end of the roller.

An object of the invention is to provide a new and improved conveyor of the kind specified.

According to one aspect of the present invention we provide a conveyor of the kind specified wherein the spindles for at least some of the rollers comprise stub spindles mounted on the side members, there being a pair of opposed stub spindles for each such roller and each stub spindle having an end portion which extends within a socket provided at an end of the roller, each end portion being barrel shaped and the stub spindle and socket being adapted to inter-engage to prevent relative rotation therebetween and the stub spindle comprising a one-piece moulding of synthetic plastics material.

According to another aspect of the invention we provide a conveyor frame of the kind specified:
(a) a first plurality of rollers each having a bearing means providing a socket at each end, a pair of stub spindles for each roller of said first plurality, each stub spindle having an end portion, which is barrel shaped and is adapted to extend within an associated socket to inter-engage therewith to prevent relative rotation therebetween, and a support portion adapted to inter-engage with a mounting means of an associated frame member to inter-engage therewith to prevent relative rotation therebetween, and each stub spindle comprising a one-piece moulding of synthetic plastics material;
(b) a second plurality of rollers each having a bearing means providing a socket, an elongate spindle element for each roller of said second plurality, each spindle element having a portion which is adapted to extend within an associated socket to inter-engage therewith to prevent relative rotation therebetween and, at opposite ends, support portions adapted to inter-engage with the same mounting means as are inter-engageable with said support portions of the stub spindles, to inter-engage with said mounting means to prevent relative rotation therebetween.

According to a further aspect of the invention we provide a method of making a conveyor of the kind specified comprising the steps of taking a conveyor frame of the kind specified, and selecting either:
(a) a first plurality of rollers each having a bearing means providing a socket at each end, a pair of stub spindles for each roller of said first plurality, each stub spindle having an end portion, which is barrel shaped and is adapted to extend within an associated socket to inter-engage therewith to prevent relative rotation therebetween, and a support portion adapted to inter-engage with a mounting means of an associated frame member to inter-engage therewith to prevent relative rotation therebetween, and each stub spindle comprising a one-piece moulding of synthetic plastics material, or
(b) a second plurality of rollers, each having a bearing means providing a socket, an elongate spindle element for each roller of said second plurality, each spindle element having a portion which is adapted to extend within an associated socket to inter-engage therewith to prevent relative rotation therebetween and, at opposite ends, support portions adapted to inter-engage with the same mounting means as are inter-engageahle with said support portions of the stub spindles to inter-engage with said moumting means to prevent relative rotation therebetween and engaging the support portions of the selected plurality of rollers with said mounting means to mount the rollers of the selected plurality in spaced relation between said pair of side members.

By "barrel shaped" we mean a shape which is symmetrical about its axis and bulges in a medial region, for example, that the end portion of the spindle is symmetrical about its axis and has an enveloping surface of generally part prolate spheroid shape and preferably bounded by edges which lie in planes normal to the axis of rotation.

Each end portion may be polygonal in cross-sections taken normal to an elongate axis thereof and may comprise intersecting surfaces which are convexly curved in radial planes containing said axis.

Preferably said surfaces are rectilinear in radial planes normal to said axis.

Preferably each end part is hexagonal in cross-section.

Each socket may be a prism shape and have a cross-section which corresponds to the maximum cross-section of the end part.

The end portion may be bounded by edges which lie in planes normal to the axis.

Each support portion may be received in an open-topped socket formed in an associated one of the side members, said open-topped socket having a part of the same cross-sectional shape as part of said socket of the roller and the respective shapes of the support portion and the open-topped socket being such that the support portion is constrained against rotation relative to the side member and the end portion is constrained with the support portion.

Each support portion may comprise a shank portion connected to the end portion, the shank being of a configuration which co-operates with the open-topped socket to effect said constraint of rotation and having two spaced apart flanges and the shank being received in the open-topped socket with the flanges either side of the side member.

The synthetic plastics material may be provided with a capability for electrical conductivity.

By virtue of providing the stub shaft with a support portion which cooperates with an open-topped socket having a part which is of the same cross-sectional shape as part of the socket of the roller, the open-topped socket of the side member can receive a spindle of the single elongate element type and thus the same rollers and side member may be used with stub spindles or elongate spindles as desired.

Furthermore, the barrel shape of the stub spindle avoids problems which can arise from inaccuracies in the axial alignment of the two stub spindles supporting a particular roller causing misalignment between each stub spindle axis and the roller axis, resulting in an increased radial force being applied to the roller and hence an increased frictional resistance to rotation of the roller. At the same time the provision of a barrel shaped stub spindle ensures that the socket of the roller is engaged by a stub spindle over as wide an area as possible. The provision of the barrel shape allows a limited amount of misalignment during each stub spindle axis and the axis of rotation of the roller and thus an increased radial force is not applied and hence there is no increased frictional resistance to the rotation of the roller and in addition the roller is adequately supported and complete self-alignment is ensured.

An embodiment of the invention will now be described by way of example with reference to the accompanying drawings, wherein:
FIGURE 1 is a transverse cross-section through a conveyor embodying the invention;
FIGURE 2 is a perspective view, with parts omitted, of the part of the conveyor of Figure 1;
FIGURE 3 is a side elevation of a stub spindle of the conveyor of Figures 1 and 2;
FIGURE 4 is a front elevation of the stub spindle of Figure 3;
FIGURE 5 is a plan view of the stub spindle of Figure 3; and
FIGURE 6 is a cross-section similar to that of Figure 1 but showing an alternative form of spindle.

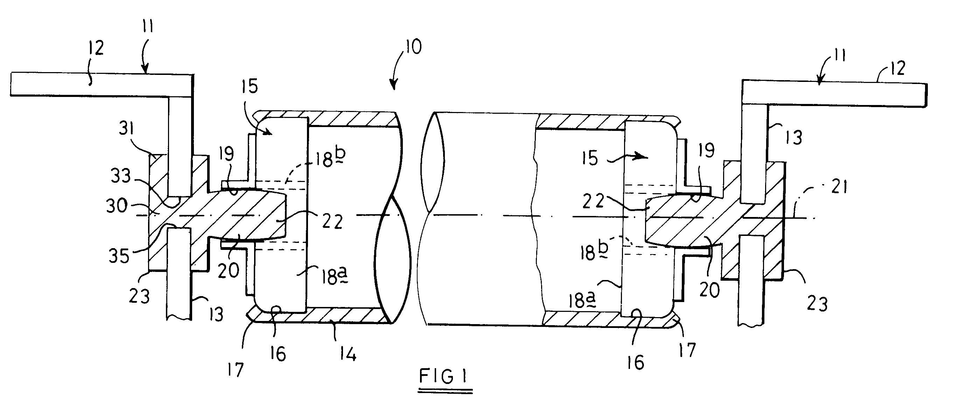

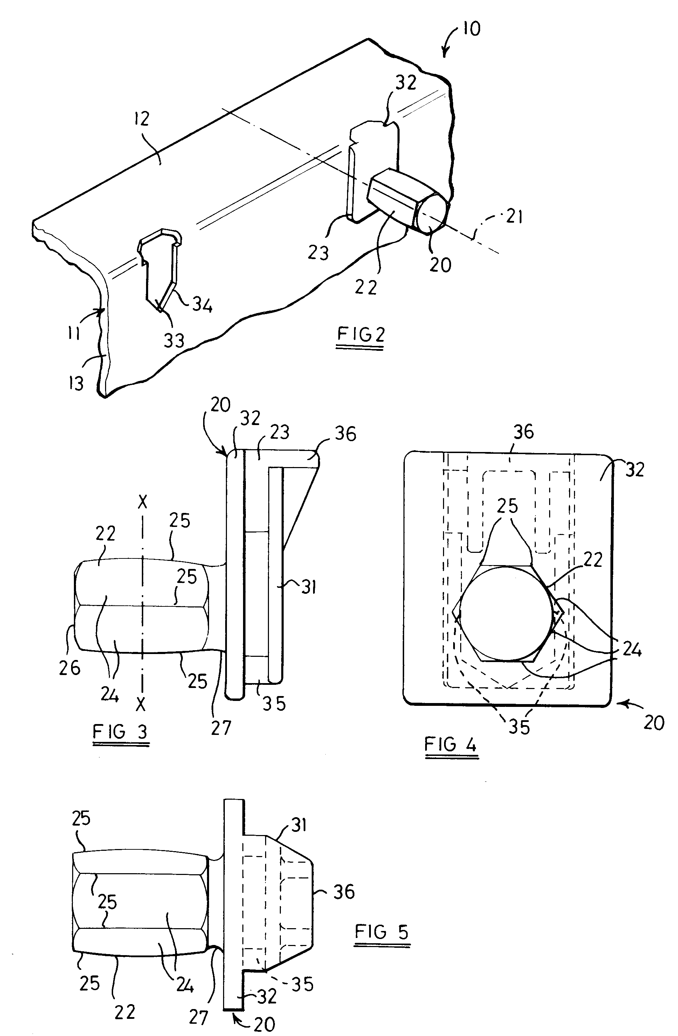

Referring to Figures 1 to 5, a conveyor 10 comprises a pair of side members 11 each being of substantially inverted L-shape in cross-section, comprising a top flange 12 and a downwardly depending side flange 13 and maintained in spaced parallel relationship by cross braces (not shown). The side members 11 are normally carried by upstanding supports (not shown) from a foundation. Extending between the side members 11 are a plurality of rollers 14. Each roller 14 in the present example has a ball hearing 15 mounted in a counter-bore 16 are each end of the roller 14 and maintained in the counter-bore 16 by swaging an end part 17 of the roller inwardly around an outer race 18a of the bearing 15.

Each ball hearing 15 has an inner race 18b provided with a socket 19 which, in the present example, is of hexagonal cross-sectional configuration.

Received within each socket 19 is a stub spindle 20 to mount the rollers for rotation about a roller axis 21.

Each stub spindle 20 is a one-piece moulding of synthetic plastics material such as Nylon 6, preferably of grade MDT10 or similar, and comprising an end portion 22 and a support portion 23. The end portion 22 is barrel shaped and hexagonal in cross-section. Accordingly the end portion 22 comprises six identical intersecting surfaces 24, each of which is convexly curved in a radial plane containing the axis 21 and rectilinear in radial planes normal to the axis 21.

The surfaces 24 intersect along curved lines 25 which in the present example are sectors of a circle but which may be of any other desired convex shape and for example may be part of an ellipse and the surfaces 25 are in contact with a conceptual enveloping surface of generally part prolate spheroidal shape.

The outer end of the end portion 22 comprises a radial surface 26 whilst at the inner end of the end portion 22 there is provided a neck 27 which connects the end portion to the support portion 23.

A cross-section taken on the line X-X through the position of maximum dimension of the end portion 22 is of a configuraition so as to be a good fit in the socket 19 of the rol!er 14. Thus, the barrel shaped end portion 22 has a central supporting zone which contacts the internal surface of the socket 19 whilst the remaining or relieved zones of the end portion 22 are radially closer to the axis 21 and thus normally do not contact the internal surface of the socket 19, that is, when the longitudinal axes of the end portions coincide with the longitudinal axis 21 of the roller.

Accordingly, a limited amount of misalignment between the longitudinal axis of each stub spindle 20 and the longitudinal axis 21 of the roller can take place, so that a roller mounted on two stub spindles is self-aligning within limits permitted by the shape of the end portions and a degree of misalignment of the stub spindle axes can be tolerated without an unacceptable increase in the frictional resistance to rotation of the roller or other deleterious effect.

Although in the present example the barrel shaped end portion is hexagonal in cross-section, if desired it may be of any other shape in cross-section which co-operates with a socket of corresponding configuration so as to prevent relative rotation therebetween. For example, the end portion may be octagonal or square in cross-section or may be of any other desired number of sides.

Further alternatively, each intersecting surface may be curved in a radial plane normal to the axis of the stub spindle and the curvature may be convex or concave, but in all cases the portion is barrel shaped, that is to say, there is a medial zone of greatest cross-sectional dimensions bounded by lateral zones of progressively decreasing cross-sectional dimension. Generally the portions of the surface of maximum cross-sectional dimension of any particular cross-section lying on a conceptual enveloping surface which is of generally prolate spheroidal shape.

The support portion 23 comprises a shank 30 which lies between two flanges 31, 32 and the shank 30 is received in an open-topped socket 33, one such socket 33 being shown with the stub spindle removed in Figure 1.

The sockets 33 are formed in the vertical flange 13 and extend into the top flange 12. Each socket 33 has a part 34 of a configuration which corresponds to the configuration of part of the socket 19 of the rollers 14 and the shank 30 also has a part 35 of corresponding configuration.

In the present example, as illustrated in the Figures, the part 34 comprises a configuration of four sides of a hexagonal, as does the part 35 of the shank 30.

Projecting inwardly from the top of the flange 31 is a closure portion 36 which occupies the part of the socket 33 formed in the flange 12.

Co-operation between the part 35 of the shank 30 and the part 34 of the socket 33 positively restrains rotation of the stub spindle relative to the side member 11 about the axis of the end portion. The shank 30 has a length substantially equal to the thickness of the flange 13 so that the flanges 31, 32 as at opposite ends of the shank 30 are held in engagement with opposite faces of the flange 13.

The stub spindle 22 is assembled with the associated side member 11 by moving the shank 30 downwardly through the open top of the socket 33 and the flange 31 at the end of the shank 30 remote from the end portion 22 passes through the part of the socket 33 formed in the flange 12 and which part is subsequently closed by the closure portion 36.

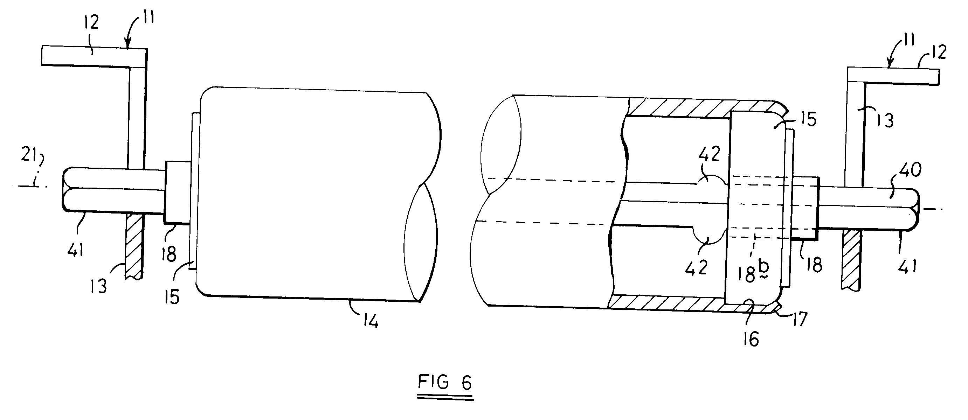

The sockets 33 in the side members 11 are equally well adapted to receive end parts of corresponding hexagonal configuration of a spindle of the single, elongate element type such as that illustrated in Figure 6, where a roller 14 having bearings 15 mounted at opposite ends thereof, as described hereinbefore in connection with Figures 1 to 5, is provided with a single elongate spindle element 40 of constant hexagonal shape in cross-section and has end parts 41 which project outwardly of the roller 14 and can be received in the sockets 33.

The spindle element 40 is retained within the roller by upsetting lugs 42 out of the material of the spindle element adjacent the inner end of the inner races 18b, the upsetting being performed before introduction of the spindle into the roller 14 and the bearings 15 being slid onto the spindle 40 from opposite ends thereof and into the counter-bores 16 into positions adjacent the lugs 42 and then the end parts 17 of the roller 14 are swaged inwardly into retaining engagement with the bearings 15.

Of course the spindle element 40 may be of any desired cross-sectional configuration intermediate the end portions 41. The end portions 41 have a configuration which corresponds to the configuration of the part 34 of the sockets 33, which sockets may be of any of the previously described shapes.

The present invention therefore enables the same side members 11 to be used irrespective of whether rollers 14 are to be mounted therebetween by means of stub spindles 20 or by means of a single elongate element 40 by virtue of providing the sockets 19 of the rollers of the same cross-sectional shape as the parts 34 of the open-topped sockets 33 in the side members and by providing stub spindles having an end part 22 which, whilst of barrel shape, has a central portion of a cross-sectional shape to co-operate with the socket 19 as well as a shank portion 30 of a shape to co-operate with the part 34 of the socket 33.

By providing the stub spindle in a synthetic plastics material, for example in Nylon 6 of grade MDT10, surprisingly, a stub spindle having the desired properties of resistance to shock loads, and tolerance to abusive use, can be provided.

Preferably, at least some of the stub spindles are provided with an electrical conductivity capability, for example by incorporating carbon black or other electrically conductive material in the plastics material to make it electrically conductive or by providing other electrically conductive means. As a result, any static electricity which is generated in use of the conveyor is conducted to the conveyor frame and thus to earth.

Whereas metal would be an obvious choice of material, it has been found that to machine stub spindles to the desired design configuration, to a consistently high quality has proved impossible.

Also, to cast or mould metal to the requisite design configuration is far too expensive making a product which is uncompetitive in commercial terms.

The features disclosed in the foregoing description, or the following claims, or the accompanying drawings, expressed in their specific forms or in the terms or means for performing the desired function, or a method or process for attaining the disclosed result, may, separately or in any combination of such features, be utilised for realising the invention in diverse forms thereof.

## Claims

1. A conveyor of the kind specified wherein the spindles for at least some of the rollers comprise stub spindles mounted on the side members, there being a pair of opposed stub spindles for each such roller and each stub spindle having an end portion which extends within a socket provided at an end of the roller, each end portion being barrel shaped, as herein defined, and the stub spindle and socket being adapted to inter-engage to prevent relative rotation therebetween and the stub spindle comprising a one-piece moulding of synthetic plastics material.

2. A conveyor frame of the kind specified and:
(a) a first plurality of rollers each having a bearing means providing a socket at each end, a pair of stub spindles for each roller of said first plurality, each stub spindle having an end portion, which is barrel shaped, as herein defined, and is adapted to extend within an associated socket to inter-engage therewith to prevent relative rotation therebetween, and a support portion adapted to inter-engage with a mounting means of an associated frame member to inter-engage therewith to prevent relative rotation therebetween, and each stub spindle comprising a one-piece moulding of synthetic plastics material;
(b) a second plurality of rollers each having a bearing means providing a socket, an elongate spindle element for each roller of said second plurality, each spindle element having a portion which is adapted to extend within an associated socket to inter-engage therewith to prevent relative rotation therebetween and, at opposite ends, support portions adapted to inter-engage with the same mounting means as are inter-engageable with said support portions of the stub spindles, to inter-engage with said mounting means to prevent relative rotation therebetween.

3. A method of making a conveyor of the kind specified comprising the steps of taking a conveyor frame of the kind specified, and selecting either:
(a) a first plurality of rollers each having a bearing means providing a socket at each end, a pair of stub spindles for each roller of said first plurality, each stub spindle having an end portion, which is barrel shaped, as hereindefined, and is adapted to extend within an associated socket to inter-engage therewith to prevent relative rotation therebetween, and a support portion adapted to inter-engage with a mounting means of an associated frame member to inter-engage therewith to prevent relative rotation therebetween, and each stub spindle comprising a one-piece moulding of synthetic plastics material, or
(b) a second plurality of rollers, each having a bearing means providing a socket, an elongate spindle element for each roller of said second plurality, each spindle element having a portion which is adapted to extend within an associated socket to inter-engage therewith to prevent relative rotation therebetween and, at opposite ends, support portions adapted to inter-engage with the same mounting means as are inter-engageable with said support portions of the stub spindles to inter-engage with said mounting means to prevent relative rotation therebetween and engaging the support portions of the selected plurality of rollers with said mounting means to mount the rollers of the selected plurality in spaced relation between said pair of side members.

4. The invention as claimed in any one of the preceding claims wherein each end portion is polygonal in cross-sections taken normal to an elongate axis thereof and comprises intersecting surfaces which are convexly curved in radial planes containing said axis.

5. The invention as claimed in Claim 4 wherein said surfaces are rectilinear in radial planes normal to said axis.

6. The invention as claimed in Claim 4 or Claim 5 wherein each end part is hexagonal in cross-section.

7. The invention as claimed in any one of the preceding claims wherein each socket is of prism shape and has a cross-section which corresponds to the maximum cross-section of the end part.

8. The invention as claimed in any one of the preceding claims wherein the end portion is bounded by edges which lie in planes normal to the axis.

9. The invention as claimed in any one of the preceding claims wherein each support portion is receivable in an open-topped socket formed in an associated one of the side members, said open-topped socket having a part of the same cross-sectional shape as part of said socket of the roller and the respective shapes of the support portion and the open-topped socket being such that the support portion is constrained against rotation relative to the side member and the end portion is constrained with the support portion.

10. The invention as claimed in Claim 9 wherein each support portion comprises a shank portion connected to the end portion, the shank being of a configuration which co-operates with the open-topped socket to effect said constraint of rotation and having two spaced apart flanges and the shank being received in the open-topped socket with the flanges either side of the side member.

11. The invention as claimed in any one of the preceding claims wherein the synthetic material is provided with a capability for electrical conductivity.
